# EUROPÄISCHE PATENTSCHRIFT

(11) **EP 2 692 573 B1**
(45) Veröffentlichungstag und Bekanntmachung des Hinweises auf die Patenterteilung: **19.09.2018**
(21) Anmeldenummer: 13003651.0
(22) Anmeldetag: 20.07.2013
(51) Int. Cl.: B60L 11/18, G01B 7/14

(54) **Verfahren zum Positionieren eines Kraftwagens, System mit einem solchen Kraftwagen sowie Kraftwagen**
Method for positioning a motor vehicle, system with such a motor vehicle as well as a motor vehicle
Procédé de positionnement d'un véhicule automobile, système doté d'un tel véhicule automobile et véhicule automobile

(30) Priorität: 01.08.2012 DE 102012015262
(43) Veröffentlichungstag der Anmeldung: 05.02.2014
(73) Patentinhaber: AUDI AG, 85045 Ingolstadt (DE)
(72) Erfinder: Enthaler, Achim, 85051 Ingolstadt (DE); Elias, Björn, 85120 Hepberg (DE)
(74) Vertreter: Herbst, Matthias Heinz

(56) Entgegenhaltungen:
- WO-A2-2011/006884
- DE-A1-102009 049 432
- DE-A1-102011 108 689
- DE-T2-602005 002 386
- JP-A- 2001 277 969
- JP-A- 2009 184 426
- JP-A- 2011 182 608

## Beschreibung

Die Erfindung betrifft ein Verfahren zum Positionieren eines Kraftwagens gemäß dem Oberbegriff des Patentanspruchs 1.

Ein solches Verfahren zum Positionieren eines Kraftwagens, ein solches System sowie ein solcher Kraftwagen sind beispielsweise der DE 42 36 286 A1 als bekannt zu entnehmen. Der Kraftwagen umfasst dabei eine elektrische Speichereinrichtung in Form einer Batterie sowie ein einer Ladevorrichtung zum berührungslosen Aufladen der elektrischen Speichereinrichtung zugeordnetes Sekundärelement. Bei dem Sekundärelement handelt es sich beispielsweise um eine Sekundärspule.

Das Sekundärelement korrespondiert mit einem Primärelement, insbesondere einer Primärspule, der Ladevorrichtung. Das Primärelement ist beispielsweise mit einem Stromnetz gekoppelt. Um die elektrische Speichereinrichtung aufzuladen, wird Energie berührungslos vom Primärelement auf das Sekundärelement induktiv übertragen.

Um eine effiziente Energieübertragung zwischen dem Primärelement und dem Sekundärelement und in der Folge ein effizientes Aufladen der elektrischen Speichereinrichtung zu realisieren, ist das Sekundärelement in eine vorgebbare Aufladeposition relativ zu dem Primärelement zu bewegen.

Dazu wird bei der DE 42 36 286 A1 das Primärelement mittels einer Bewegungseinrichtung innerhalb eines vorgegebenen Raumbereichs in allen drei Raumkoordinaten relativ zu einer Fahrbahn des Kraftwagens bewegt, während der Kraftwagen auf der Fahrbahn stillsteht und sich nicht relativ zu dieser bewegt.

Auch aus der DE 10 2009 033 236 A1 ist ein System mit einem Kraftwagen und mit einem auf Seiten einer Fahrbahn des Kraftwagens angeordneten Primärelement einer Ladevorrichtung zum berührungslosen, insbesondere induktiven, Aufladen einer elektrischen Speichereinrichtung des Kraftwagens bekannt. An dem Kraftwagen ist ein mit dem Primärelement korrespondierendes Sekundärelement der Ladevorrichtung angeordnet. Das Sekundärelement ist relativ zu dem Primärelement durch Bewegen des Kraftwagens auf der Fahrbahn relativ zur Fahrbahn in eine vorgebbare Aufladeposition bewegbar.

Es ist eine Einrichtung zur Detektion des Vorhandenseins eines Gegenstands innerhalb eines vorbestimmten Raumes, der zumindest den während der Energieübertragung zwischen dem Primärelement und dem Sekundärelement liegenden Raum umfasst, vorgesehen.

Die DE 691 19 168 T2 offenbart ein Transportsystem mit einem Transportfahrzeug, auf dem eine Batterie angeordnet ist, die das Transportfahrzeug antreibt. Das Transportsystem umfasst eine Fahrspur, entlang der das Transportfahrzeug automatisch fährt. Zudem ist ein Stromaufladesystem für das Transportfahrzeug vorgesehen, wobei das Stromaufladesystem eine Stromversorgungselektrode umfasst, die entlang und an einem vorbestimmten Abschnitt der Fahrspur angeordnet ist. Ferner ist eine Stromaufnahmeelektrode vorgesehen, die an dem Transportfahrzeug angeordnet und mit der Batterie verbunden ist sowie einen Gleitkontakt mit der Stromversorgungselektrode während der automatischen Fahrt des Fahrzeugs aufweist.

Aus der WO 2011/006884 A2 geht eine elektronische Positionierhilfe für Elektrofahrzeuge im Nahbereich von induktiven Ladestationen hervor. Es werden im Fahrzeug vorhandene oder optionshalber vorgesehene Sensoren auf Basis von Radar, Laser, Lidar, Ultraschall, Infrarot, Satellit oder Induktion und die darauf aufbauenden Einparkhilfen zusätzlich dafür herangezogen, induktive Ladestationen im Nahbereich anhand des bauseitigen Spulengehäuses oder der inwendigen Spulentechnik ohne visuelle Umgebungsdarstellung, ohne manuelle Bedienereingabe und ohne bauseitige Zusatzreflektoren vollautomatisch zu erkennen und das Fahrzeug im rechnerunterstützten Rangierbetrieb mit der Spule am Fahrzeugboden hinreichend genau über der bauseitigen Spule zu positionieren, ohne dass die beiden Spulen mit zusätzlichen Verschiebe- und Hubeinrichtungen in eine noch exaktere oder nähere Überlagerung gebracht werden müssen.

Schließlich ist der DE 10 2009 049 432 A1 eine Ladestation für ein auf einem Boden bewegliches Fahrzeug mit Energiespeicher als bekannt zu entnehmen. In einem Teilbereich des Bodens, insbesondere in einer Erhebung des Bodens, ist ein Primärleiter verlegt. Ferner ist im Boden eine Mulde angeordnet, so dass das Fahrzeug mittels zumindest eines Rades, insbesondere mittels seiner beiden vorderen oder hinteren Räder, in der Mulde positionierbar ist, so dass eine Sekundärwicklung des Fahrzeugs mit dem Primärleiter induktiv gekoppelt ist.

Die JP 2011-182608 A offenbart ein Verfahren zum Positionieren eines Kraftwagens bezüglich eines auf seiten einer Fahrbahn des Kraftwagens angeordneten Primärelements einer Ladevorrichtung zum berührungslosen Aufladen einer elektrischen Speichereinrichtung des Kraftwagens, bei welchem ein mit dem Primärelement korrespondierendes, am Kraftwagen angeordnetes Sekundärelement der Ladevorrichtung relativ zu dem Primärelement durch Bewegen des Kraftwagens auf der Fahrbahn relativ zu dieser in eine vorgebbare Aufladeposition bewegt wird. Dabei wird ein Erreichen der Aufladeposition durch das Sekundärelement mittels wenigstens eines Sensors und zumindest eines Positionierungselements ermittelt. Das Positionierungselement weist zumindest zwei voneinander unterschiedliche Markierungen auf. Zum Ermitteln des Erreichens werden die Markierungen mittels des Sensors erfasst.

Der WO 2012/047779 A1 ist ein Sicherheitssystem für eine Ladevorrichtung zum berührungslosen Aufladen einer Batterie eines Kraftwagens als bekannt zu entnehmen. Das Sicherheitssystem umfasst eine Erfassungseinrichtung zum Erfassen, ob sich ein Objekt in unmittelbarer Nähe der Ladevorrichtung befindet. Hierzu umfasst die Erfassungseinrichtung wenigstens einen Temperatursensor. Darüber hinaus ist eine Hinweiseinrichtung vorgesehen, welche mit der Erfassungseinrichtung gekoppelt ist. Wird mittels der Erfassungseinrichtung erfasst, dass sich ein Objekt in unmittelbarer Nähe der Ladevorrichtung befindet, so wird mittels der Hinweiseinrichtung ein Hinweissignal ausgegeben, mittels welchem auf die Tatsache, dass sich das Objekt in unmittelbarer Nähe der Ladevorrichtung befindet, hingewiesen wird.

Aus der US 2007/0069684 A1 ist eine Batterieladevorrichtung für elektronische Geräte, insbesondere für portable elektronische Geräte, bekannt. Die Batterieladevorrichtung umfasst eine erste Oberfläche, auf der das elektronische Gerät angeordnet werden kann. Darüber hinaus umfasst die Batterieladevorrichtung wenigstens eines Lichtquelle, mittels welcher Licht von der ersten Oberfläche abgestrahlt werden kann. Des Weiteren ist wenigstens ein Lichtsensor vorgesehen, mittels welchem vom elektronischen Gerät reflektiertes Licht erfassbar ist.

Die JP 2009-184426 A offenbart eine Parkhilfe für einen Kraftwagen, welche Markierungen auf der Fahrbahn nutzt, um einen Einparkvorgang zu unterstützen.

Auch der JP 2001-277969 A ist eine Parkhilfe für einen Kraftwagen als bekannt zu entnehmen. Die Einparkhilfe umfasst eine Kamera, mittels welcher eine Markierung erfasst werden kann, Die Markierung wird für den Einparkvorgang genutzt.

Schließlich offenbart die US 2010/0060486 A1 eine Einparkhilfe für einen Kraftwagen mit einer Kamera, mittels welcher eine Markierung erfasst wird. Die Markierung umfasst dabei wenigstens zwei voneinander unterschiedliche Markierungsbereiche, welche sich in ihrer jeweiligen Farbe oder ihrem jeweiligen Muster voneinander unterscheiden.

Außerdem offenbart die WO 2011/006884 A2 eine elektronische Positionierhilfe für Elektrofahrzeuge im Nahbereich von induktiven Ladestationen.

Auch die JP 2011 182608 A1 offenbart ein Fahrzeug, welches bezüglich eines auf Seiten einer Fahrbahn angeordneten Primärelements einer Ladevorrichtung ausgerichtet wird.

Des Weiteren ist aus der DE 60 2005 002 386 T2 ein Bewegungskörpersystem bekannt.

Das präzise Erreichen der vorgebbaren Aufladeposition ist vorteilhaft, um einen hohen Wirkungsgrad bei der Energieübertragung zwischen dem Primärelement und dem Sekundärelement zu erzielen. Bei den bekannten Verfahren, Systemen und Kraftwagen ist eine präzise Positionierung nicht oder nur mit einem sehr hohen Aufwand möglich.

Es ist daher Aufgabe der vorliegenden Erfindung, ein Verfahren der eingangs genannten Art bereitzustellen, welche eine besonders präzise Positionierung des Sekundärelements bezüglich des Primärelements auf besonders einfache Weise ermöglichen.

Diese Aufgabe wird durch ein Verfahren mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Ein erster Aspekt der Erfindung betrifft ein Verfahren zum Positionieren eines Kraftwagens, insbesondere eines Personenkraftwagens, bezüglich eines auf Seiten einer Fahrbahn des Kraftwagens angeordneten Primärelements einer Ladevorrichtung zum berührungslosen Aufladen einer elektrischen Speichereinrichtung des Kraftwagens. Bei dem Verfahren wird ein mit dem Primärelement korrespondierendes, am Kraftwagen angeordnetes Sekundärelement der Ladevorrichtung relativ zu dem Primärelement durch Bewegen des Kraftwagens auf der Fahrbahn relativ zur Fahrbahn in eine vorgebbare Aufladeposition bewegt.

Um ein besonders präzises Bewegen des Sekundärelements in die Aufladeposition auf einfache Weise zu realisieren, ist es beim ersten Aspekt vorgesehen, dass ein Erreichen der Aufladeposition durch das Sekundärelement mittels wenigstens eines Sensors und zumindest eines wenigstens zwei voneinander unterschiedliche Markierungen aufweisenden Positionierungselements ermittelt wird, indem die Markierungen mittels des Sensors erfasst werden.

Hierdurch kann der Kraftwagen und somit das Sekundärelement auf einfache Weise besonders präzise relativ zu dem Primärelement positioniert werden, ohne dass das Sekundärelement oder das Primärelement zu aktivieren sind. Die Ermittlung des Erreichens der Aufladeposition ist ferner besonders robust und reproduzierbar durchführbar, da keine Kommunikation zwischen dem stationären Primärelement und dem mobilen Sekundärelement vorgesehen und vonnöten ist. Ferner ist das Verfahren besonders kostengünstig durchführbar, da nur eine geringe Anzahl an Sensoren vonnöten ist und der Sensor sowie das Positionierungselement selbst nur geringe Kosten aufweisen.

Erfindungsgemäß ist eine der Markierungen gegenüber der anderen Markierung erhaben, wobei als Sensor ein Abstandssensor verwendet wird, mittels welchem zum Ermitteln des Erreichens der Aufladeposition jeweilige, voneinander unterschiedliche Abstände des Abstandssensors bzw. des Kraftwagens von der jeweiligen Markierung erfasst werden. Mit anderen Worten kann der Abstandssensor die erhabene sowie die demgegenüber zurückversetzte Markierung erfassen, so dass dadurch eine Position des Sekundärelements relativ zum Primärelement ermittelbar ist. In der Folge kann ermittelt werden, ob diese Position mit der Aufladeposition zumindest im Wesentlichen, beispielsweise im Rahmen vorgebbarer Toleranzen, übereinstimmt oder ob eine, beispielsweise einen Schwellenwert überschreitende Abweichung zwischen der Position und der Aufladeposition vorliegt.

Dabei weist das Positionierungselement selbst eine sehr hohe Robustheit gegenüber Witterungseinflüssen auf, so dass das Erreichen der Aufladeposition auch bei widrigen Umgebungsbedingungen wie beispielsweise Regen oder nach einer langen Lebensdauer des Positionierungselements noch präzise ermittelt werden kann.

Aufgrund der präzisen Ausrichtung des Sekundärelements relativ zum Primärelement kann die elektrische Speichereinrichtung, welche beispielsweise eine Batterie des Kraftwagens ist, effizient und mit nur sehr geringen Verlusten aufgeladen werden. Dadurch ist auch ein sehr schneller Aufladevorgang realisierbar. Mit anderen Worten kann die elektrische Speichereinrichtung in nur sehr kurzer Zeit aufgeladen werden.

Ferner ist es erfindungsgemäß vorgesehen, dass als die Markierungen Absätze und quer zur Fahrtrichtung verlaufende Rillen verwendet werden, wobei die Absätze gegenüber den Rillen von der Fahrbahn weg erhaben sind. Dabei wird als der Sensor ein Abstandssensor verwendet, wobei wenigstens ein in Fahrzeugquerrichtung von dem Abstandssensor beabstandeter, zweiter Abstandssensor verwendet wird. Während einer Bewegung des Kraftwagens in die Fahrtrichtung über das Primärelement werden die Absätze und die Rillen mittels eines der als Ultraschallsensoren ausgebildeten Abstandssensoren erfasst und gezählt, indem jeweilige, voneinander unterschiedliche Abstände des einen Abstandssensors von den jeweiligen Absätzen und Rillen erfasst werden. Ferner wird ein in Fahrzeugquerrichtung verlaufender Querversatz zwischen dem Primärelement und dem Sekundärelement dadurch ermittelt, dass die Absätze und die Rillen mittels des einen Abstandssensors erfasst werden und ein durch den anderen Abstandssensor bewirktes Erfassen der Absätze und Rillen unterbleibt. Außerdem wird das Erreichen der Aufladeposition in Abhängigkeit von der Anzahl der überfahrenen Absätze und Rillen und in Abhängigkeit von dem Querversatz ermittelt.

Um eine besonders präzise Ausrichtung des Sekundärelements relativ zum Primärelement in der Aufladeposition zu realisieren, ist es bei einer weiteren Ausführungsform der Erfindung vorgesehen, dass das Positionierungselement in zumindest bereichsweiser Überdeckung mit dem Primärelement oder mit dem Sekundärelement angeordnet ist.

Erstreckt sich dabei das Positionierungselement in einer Ebene zumindest im Wesentlichen flächig und überragt das Positionierungselement in der Ebene zumindest einen Rand des Primärelements bzw. des Sekundärelements, so kann dadurch das Erreichen der Aufladeposition auf besonders einfache Weise ermittelt werden.

Im Rahmen des erfindungsgemäßen Verfahrens ist es möglich, den den Kraftwagen auf der Fahrbahn relativ zu dieser bewegenden Fahrer des Kraftwagens beim Ausrichten des Sekundärelements relativ zum Primärelement zu unterstützen, indem beispielsweise das Erreichen der Aufladeposition auf einem Bildschirm im Innenraum des Kraftwagens angezeigt wird. Ferner kann vorgesehen sein, dass der Sensor und das Positionierungselement dazu genutzt werden, während des Bewegens des Kraftwagens eine aktuelle Position des Kraftwagens, insbesondere des Sekundärelements, relativ zum Primärelement zu erfassen und diese Position auf dem Bildschirm anzuzeigen, so dass der Fahrer dadurch besonders einfach den Kraftwagen derart bewegen kann, dass das Sekundärelement in die Aufladeposition gelangt. Das Verfahren ermöglicht somit eine effektive und präzise Unterstützung des Fahrers.

Alternativ kann im Rahmen des erfindungsgemäßen Verfahrens vorteilhafterweise auch eine automatische Bewegung des Sekundärelements in die Aufladeposition erfolgen. Hierzu ist es bei einer vorteilhaften Ausführungsform der Erfindung vorgesehen, dass das Sekundärelement in die Aufladeposition bewegt wird, indem der Kraftwagen mittels einer Steuereinheit des Kraftwagens bewegt wird, bis das Erreichen der Aufladeposition mittels des Sensors und des Positionierungselements ermittelt wird. Dieses automatische Bewegen des Kraftwagens kann beispielsweise im Rahmen eines automatisierten Parksystems des Kraftwagens erfolgen, wobei der Kraftwagen ohne oder mit nur sehr geringem Zutun des Fahrers eine entsprechende Position relativ zum Primärelement einnimmt, so dass sich das Sekundärelement in der Aufladeposition befindet. Insbesondere wird der Kraftwagen mittels der Steuereinheit zumindest gelenkt. Alternativ oder zusätzlich kann vorgesehen sein, dass der Kraftwagen zum Bewegen des Sekundärelements in die Aufladeposition mittels der Steuereinheit automatisch beschleunigt und/oder gebremst wird. Dadurch ist ein besonders hoher Fahr- und Betätigungskomfort des Kraftwagens realisierbar.

Ein zweiter Aspekt der Erfindung betrifft ein System mit einem Kraftwagen, insbesondere einem Personenkraftwagen, und mit einem auf Seiten einer Fahrbahn des Kraftwagens angeordneten Primärelement einer Ladevorrichtung zum berührungslosen Aufladen einer elektrischen Speichereinrichtung des Kraftwagens. An dem Kraftwagen ist ein mit dem Primärelement korrespondierendes Sekundärelement der Ladevorrichtung angeordnet, das relativ zu dem Primärelement durch Bewegen des Kraftwagens auf der Fahrbahn relativ zu dieser in eine vorgebbare Aufladeposition bewegbar ist.

Um eine besonders präzise Positionierung des Kraftwagens und somit des Sekundärelements relativ zum Primärelement auf besonders einfache Weise zu realisieren, sind bei dem System zumindest ein wenigstens zwei voneinander unterschiedliche Markierungen aufweisendes Positionierungselement und wenigstens ein Sensor vorgesehen, mittels welchem zum Ermitteln eines Erreichens der Aufladeposition die Markierungen erfassbar sind. Erfindungsgemäß ist eine der Markierungen gegenüber der anderen Markierung erhaben, wobei der Sensor als Abstandssensor ausgebildet ist, mittels welchem zum Ermitteln des Erreichens der Aufladeposition jeweilige, voneinander unterschiedliche Abstände des Abstandssensors von der jeweiligen Markierung erfassbar sind. Vorteilhafte Ausgestaltungen des ersten Aspekts der Erfindung sind als vorteilhafte Ausgestaltungen des zweiten Aspekts der Erfindung anzusehen und umgekehrt.

Das Positionierungselement kann auf Seiten der Fahrbahn vorgesehen sein, während der Sensor beispielsweise am Kraftwagen angeordnet ist. Entsprechend dazu umgekehrt kann auch vorgesehen sein, dass der Sensor auf Seiten der Fahrbahn und somit auf Seiten des Primärelements angeordnet ist, während das Markierungselement am Kraftwagen gehalten ist.

Durch das Erfassen der Markierungen mittels des Sensors ist es möglich, eine Position des Kraftwagens und somit des Sekundärelements relativ zum Primärelement zu erfassen und in der Folge zu ermitteln, ob die Position mit der Aufladeposition beispielsweise innerhalb vorgebbarer Toleranzen übereinstimmt. Ist dies der Fall, so ist das Sekundärelement in die Aufladeposition bewegt, wodurch eine besonders effiziente Energieübertragung zwischen dem Primärelement und dem Sekundärelement möglich ist.

Ein dritter Aspekt der Erfindung betrifft einen Kraftwagen zum Durchführen des erfindungsgemäßen Verfahrens, mit wenigstens einer elektrischen Speichereinrichtung und mit wenigstens einem eine Ladevorrichtung zum berührungslosen Aufladen der elektrischen Speichereinrichtung zugeordneten Sekundärelement, welches relativ zu einem auf Seiten einer Fahrbahn des Kraftwagens angeordneten Primärelement der Ladevorrichtung durch Bewegen des Kraftwagens auf einer Fahrbahn relativ zu dieser in eine vorgebbare Aufladeposition bewegbar ist.

Um eine besonders präzise Positionierung des Sekundärelements relativ zu dem Primärelement in der Aufladeposition auf besonders einfache Weise zu ermöglichen, ist der wenigstens eine Sensor des Kraftwagens vorgesehen, mittels welchem zum Ermitteln des Erreichens der Aufladeposition die wenigstens zwei voneinander unterschiedlichen Markierungen des auf Seiten des Primärelements angeordneten Positionierungselements erfassbar sind. Vorteilhafte Ausgestaltungen der ersten beiden Aspekte der Erfindung sind als vorteilhafte Ausgestaltungen des dritten Aspekts der Erfindung anzusehen und umgekehrt.

Mittels des Sensors ist es somit möglich, eine Position des Kraftwagens und somit des Sekundärelements relativ zum Primärelement besonders präzise zu erfassen, so dass das Sekundärelement besonders präzise in die Aufladeposition bewegt werden kann.

Bei einer besonders vorteilhaften Ausführungsform der Erfindung schließt sich der Sensor in Fahrzeuglängsrichtung und/oder in Fahrzeugquerrichtung an das Sekundärelement an. Hierdurch wird die Energieübertragung zwischen dem Primärelement und dem Sekundärelement nicht beeinträchtigt bei gleichzeitiger Realisierung einer besonders präzisen Erfassung einer Position des Sekundärelements relativ zum Primärelement.

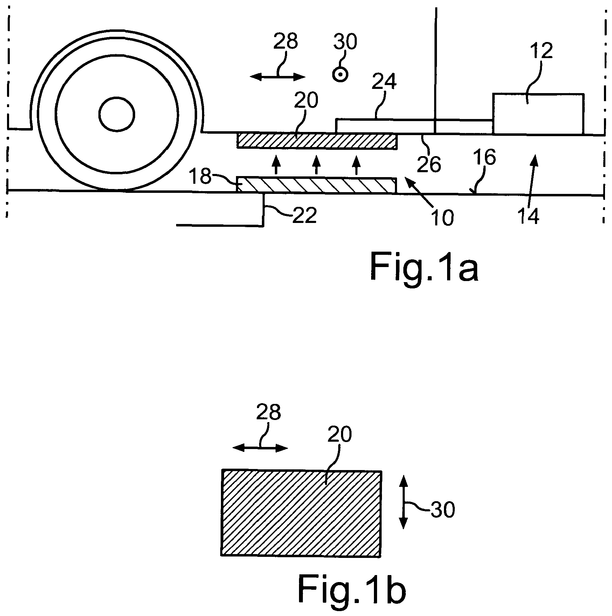

In weiterer vorteilhafter Ausgestaltung der Erfindung ist der Sensor in Fahrzeughochrichtung unterhalb eines Fahrzeugbodens des Kraftwagens angeordnet. Der Sensor ist somit von Betrachtern des Kraftwagens optisch nicht wahrnehmbar. Ferner ist dadurch eine sehr einfache und unaufwändige Ermittlung des Erreichens der Aufladeposition ermöglicht.
Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Fig. 1a-d dienen dabei zur Erläuterung des Hintergrunds der Erfindung. Die Erfindung ist durch die Ansprüche definiert.

Die Zeichnung zeigt in:
- Fig. 1a: eine schematische Seitenansicht einer Ladevorrichtung zum berührungslosen Aufladen einer elektrischen Speichereinrichtung eines Kraftwagens, mit einem auf Seiten einer Fahrbahn des Kraftwagens angeordneten Primärelement und mit einem auf Seiten des Kraftwagens angeordneten Sekundärelement, wobei sich das Sekundärelement relativ zum Primärelement in einer Aufladeposition befindet;
- Fig. 1b: eine schematische Draufsicht der Ladevorrichtung;
- Fig. 1c: eine weitere schematische Seitenansicht der Ladevorrichtung, wobei sich das Sekundärelement außerhalb der Aufladeposition befindet; und
- Fig. 1d: eine weitere schematische Draufsicht der Ladevorrichtung, wobei sich das Sekundärelement außerhalb der Aufladeposition befindet;
- Fig. 2: eine schematische Draufsicht des Primärelements, welchem ein Positionierungselement zugeordnet ist, mittels welchem ein Erreichen der Aufladeposition ermittelbar ist;
- Fig. 3: eine schematische Seitenansicht der Ladevorrichtung mit dem Primärelement und dem Positionierungselement gem. Fig. 2, wobei auf Seiten des Sekundärelements vier Sensoren vorgesehen sind, mittels welchen das Erreichen der Aufladeposition durch das Sekundärelement erfassbar ist;
- Fig. 4: eine schematische Draufsicht des Primärelements mit dem Positionierungselement gemäß Fig. 2 und des Sekundärelements mit den Sensoren gemäß Fig. 3;
- Fig. 5: eine schematische Draufsicht des Sekundärelements mit den Sensoren gemäß Fig. 4, wobei die Sensoren bezüglich ihrer Positionierung relativ zu dem Sekundärelement im Vergleich zu Fig. 4 verändert sind;
- Fig. 6: eine schematische Draufsicht des Primärelement, welchem eine weitere Ausführungsform des Positionierungselements zugeordnet ist; und
- Fig. 7: eine schematische Draufsicht des Sekundärelements, welchem zwei Sensoren zugeordnet sind, mittels welchen im Zusammenwirken mit dem Positionierungselement gemäß Fig. 6 das Erreichen der Aufladeposition durch das Sekundärelement erfassbar ist.

Fig. 1a zeigt in einer schematischen Seitenansicht eine Ladevorrichtung 10 zum berührungslosen Aufladen einer in Fig. 1a sehr schematisch dargestellten elektrischen Speichereinrichtung in Form einer Batterie 12 eines Personenkraftwagens 14.

Der in Fig. 1a ausschnittsweise erkennbare Personenkraftwagen 14 ist beispielsweise als Hybrid-Fahrzeug oder als Elektrofahrzeug ausgebildet und weist wenigstens einen Elektromotor auf, mittels welchem der Personenkraftwagen 14 antreibbar ist. Zum Betreiben des Elektromotors wird dieser mit elektrischem Strom aus der Batterie 12 versorgt. Das Versorgen des Elektromotors mit elektrischer Energie aus der Batterie 12 geht mit der Reduzierung des Speicherinhalts der Batterie 12 einher.

Um die Batterie 12 besonders komfortabel und einfach wieder aufladen zu können, ist die Ladevorrichtung 10 vorgesehen, welche ein auf Seiten einer Fahrbahn 16 des Personenkraftwagens 14 angeordnetes Primärelement 18 sowie ein am Personenkraftwagen 14 angeordnetes Sekundärelement 20 aufweist. Vorliegend sind das Primärelement 18 und das Sekundärelement 20 zumindest im Wesentlichen plattenförmig ausgebildet, weswegen sie auch als Ladeplatten bezeichnet werden. Das Primärelement 18 und das Sekundärelement 20 umfassen eine jeweilige Spule, zwischen welchen berührungslos Energie übertragbar ist.

Das Primärelement 18 ist dabei über wenigstens eine Stromleitung 22 mit einem Stromnetz verbunden und kann - um die Batterie 12 aufzuladen und wie in Fig. 1a durch Richtungspfeile angedeutet ist - elektrische Energie berührungslos, d.h. ohne Kabel, an das Sekundärelement 20 übertragen. Das Sekundärelement 20 ist über ein Leitungselement 24 mit der Batterie 12 verbunden, so dass die vom Primärelement 18 auf das Sekundärelement 20 übertragene Energie in die Batterie 12 eingespeist werden kann.

Wie Fig. 1a zu entnehmen ist, ist das Sekundärelement 20 unterhalb eines Fahrzeugbodens 26 des Personenkraftwagens 14 angeordnet. Vorliegend ist das Sekundärelement 20 am Fahrzeugboden 26 angeordnet und kann auch in den Fahrzeugboden 26 integriert sein.

Zur Realisierung einer effizienten Energieübertragung wird das am Personenkraftwagen 14 angeordnete und somit mobile Sekundärelement 20 relativ zu dem stationären Primärelement 18 durch Bewegen des Personenkraftwagens 14 auf der Fahrbahn 16 relativ zur Fahrbahn 16 in eine vorgebbare Aufladeposition bewegt, in der das Sekundärelement 20 das Primärelement 18 in Fahrzeughochrichtung nach oben überdeckt. Diese vorteilhafte Aufladeposition ist dabei in Fig. 1a und 1b veranschaulicht. Wie anhand von Fig. 1a erkennbar ist, besteht bei Erreichen der Aufladeposition durch das Sekundärelement 20 kein oder innerhalb vorgebbarer Toleranzen ein nur sehr geringer Versatz in durch einen Richtungspfeil 28 angedeuteter Fahrzeuglängsrichtung. Aus Fig. 1b ist erkennbar, dass bei Erreichen der Aufladeposition auch in durch einen Richtungspfeil angedeuteter Fahrzeugquerrichtung kein oder innerhalb vorgebbarer Toleranzen ein nur sehr geringer Versatz zwischen dem Primärelement 18 und dem Sekundärelement 20 besteht.

Das Bewegen des Sekundärelements 20 durch Bewegen des Personenkraftwagens 14 auf der Fahrbahn 16 relativ zu dieser ist nun - falls keine entsprechenden Gegenmaßnahmen getroffen sind - für den Fahrer des Personenkraftwagens 14 schwierig, da das stationäre Primärelement 18 bei einem Parkvorgang des Personenkraftwagens 14, in dessen Rahmen die Aufladeposition angefahren werden soll, für den Fahrer unterhalb des Personenkraftwagens 14 aus dem sichtbaren Bereich des Fahrers verschwindet. Eine präzise Positionierung des Personenkraftwagens 14 über dem stationären Primärelement 18 ist daher nur sehr schwer oder nicht möglich.

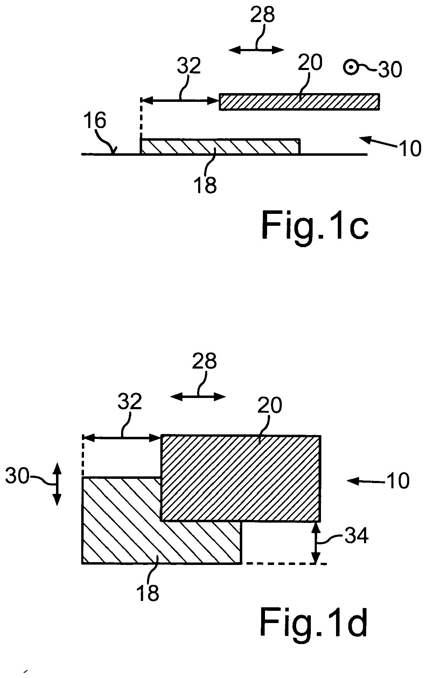

Fig. 1c und 1d veranschaulichen eine Position des Sekundärelements 20 außerhalb der Aufladeposition, wobei in Fig. 1c bis Fig. 7 der Übersicht wegen der Personenkraftwagen 14 nicht dargestellt ist.

Gemäß Fig. 1c besteht ein durch einen Doppelpfeil 32 angedeuteter Versatz in Fahrzeuglängsrichtung, so dass eine für die Energieübertragung zwischen dem Primärelement 18 und dem Sekundärelement 20 wirksame Fläche, in welcher das Sekundärelement 20 das Primärelement 18 überdeckt, gegenüber der Aufladeposition geringer ist. Anhand von Fig. 1d ist durch einen Richtungspfeil 34 auch ein Versatz in Fahrzeugquerrichtung angedeutet, wodurch die wirksame Fläche zwischen dem Primärelement 18 und dem Sekundärelement 20 besonders gering ist. In der Folge kommt es zu unerwünschten Energieverlusten infolge eines schlechten Wirkungsgrads beim Aufladen. Ferner können Bauteile des Personenkraftwagens 14 aufgrund der fehlerhaften Positionierung gegebenenfalls erwärmt werden. Der schlechte Wirkungsgrad führt zu langen Ladezeiten. Darüber hinaus sind gegebenenfalls umständliche und mehrfache Rangiervorgänge durch den Fahrer durchzuführen, bis eine ausreichend genaue Positionierung des Sekundärelements 20 relativ zum Primärelement 18 realisiert ist.

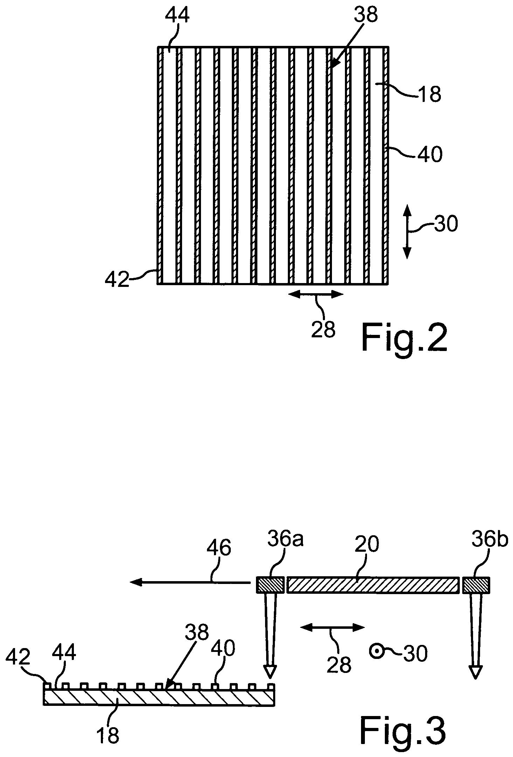

Um nun eine besonders präzise Positionierung des Sekundärelements 20 in die Aufladeposition auf einfache Weise zu realisieren, wird ein anhand von Fig. 2 bis Fig. 4 veranschaulichtes Verfahren zum Positionieren des Personenkraftwagens 14 bezüglich des Primärelements 18 durchgeführt, bei welchem ein Erreichen der Aufladeposition durch das Sekundärelement 20 infolge des Bewegens des Personenkraftwagens 14 auf der Fahrbahn 16 relativ zu dieser mittels Sensoren 36a-d und mittels eines Markierungen 38 aufweisenden Positionierungselements 40 ermittelt wird, indem die Markierungen 38 mittels der Sensoren 36a - d erfasst werden.

Vorliegend ist das Positionierungselement 40 mit den Markierungen 38 dem stationären Primärelement 18 zugeordnet und somit auf Seiten des Primärelements 18 angeordnet. Als die Markierungen 38 umfasst das Positionierungselement 40 Absätze 42 und Vertiefungen 44, welche jeweils zwischen zwei der Absätze 42 angeordnet sind und gegenüber den Absätzen 42 zurückversetzt sind. Die Absätze 42 stellen dabei Höhen des Positionierungselements 40 dar, während die Vertiefungen 44 Tiefen oder Rillen darstellen. Vorliegend sind beispielhaft dreizehn Absätze 42 und zwölf Vertiefungen 44 vorgesehen, welche abwechselnd angeordnet sind. Die Absätze 42 sind dabei gegenüber den Vertiefungen 44 von der Fahrbahn 16 weg erhaben. Durch die Absätze 42 und die demgegenüber zurückversetzten Vertiefungen 44 ist ein Höhenprofil des Positionierungselements 40 geschaffen.

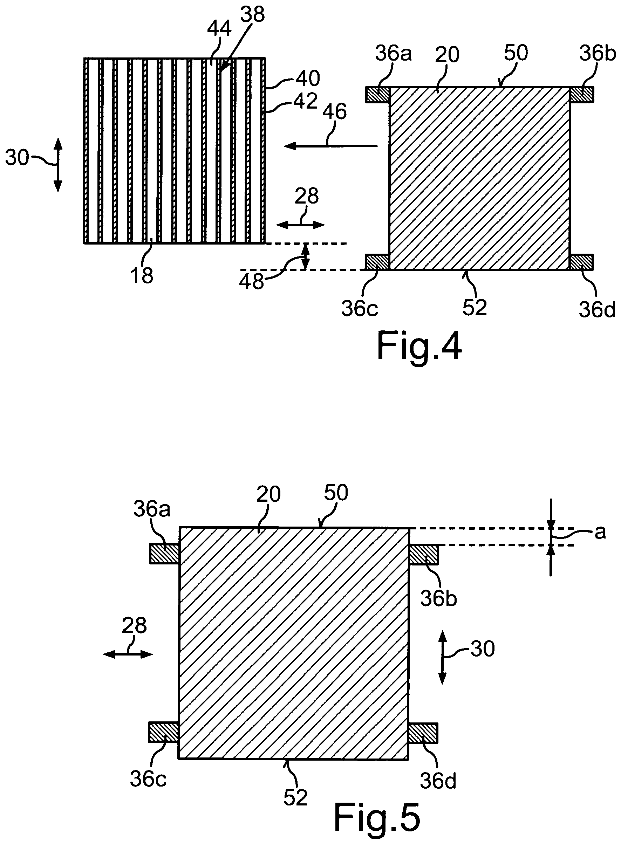

Wie in Zusammenschau mit Fig. 3 und 4 erkennbar ist, sind die Sensoren 36a-d dem Sekundärelement 20 zugeordnet und entsprechend am Personenkraftwagen 14 und vorliegend an dessen Fahrzeugboden 26 außenseitig angeordnet und auf die Fahrbahn 16 ausgerichtet. Die Sensoren 36a-d sind dabei als Abstandssensoren ausgebildet, mittels welchen jeweilige, voneinander unterschiedliche Abstände der Sensoren 36a-d bzw. des Personenkraftwagens 14 von den jeweiligen Absätzen 42 und Vertiefungen 44 erfasst werden. Mit anderen Worten, befindet sich beispielsweise der Sensor 36a über einem der Absätze 42, so ist der Abstand zwischen diesem Absatz 42 und dem Sensor 36a geringer, als wenn sich der Sensor 36a über einer der Vertiefungen 44 befinden würde.

Wird der Personenkraftwagen 14 mit den am Fahrzeugboden 26 angeordneten Sensoren 36a-d nun im Rahmen eines Parkvorgangs in einer durch einen Richtungspfeil 46 angedeuteten Fahrtrichtung über das stationäre Primärelement 18 bewegt, so werden anhand der geschilderten Abstandsmessung die Absätze 42 und die Vertiefungen 44 erfasst. Dabei wird die Anzahl der überfahrenen Absätze 42 und Vertiefungen 44 beispielsweise mittels eines nicht dargestellten Steuergeräts gezählt. Das Erreichen der Aufladeposition durch das Sekundärelement 20 beim Überfahren des Positionierungselements 40 in der durch den Richtungspfeil 46 angedeuteten Fahrtrichtung korrespondiert dabei mit dem Überfahren einer vorgebbaren Anzahl an Absätzen 42 und Vertiefungen 44.

Das Steuergerät vergleicht nun diese vorgebbare einer mit der tatsächlichen Anzahl an bereits überfahrenen Absätzen 42 und Vertiefungen 44, so dass durch einen Vergleich der vorgebbaren Anzahl mit der tatsächlichen Anzahl eine aktuelle Position des Sekundärelements 20 relativ zum Primärelement 18 ermittelt werden kann. Stimmt die vorgebbare Anzahl beispielsweise im Rahmen einer vorgebbaren Toleranz mit der erfassten, tatsächlichen Anzahl an überfahrenen Absätzen 42 und Vertiefungen 44 überein, so hat das Sekundärelement 20 seine vorteilhafte Aufladeposition relativ zum Primärelement 18 erreicht und ein effizienter Ladevorgang ist möglich.

Dabei kann vorgesehen sein, dass das dadurch ermittelte Erreichen der Aufladeposition dem Fahrer durch wenigstens ein akustisches und/oder optisches und/oder haptisches Signal rückgemeldet wird, so dass der Fahrer den Personenkraftwagen 14 in der Aufladeposition anhalten kann. Alternativ dazu kann vorgesehen sein, dass der Parkvorgang automatisch durch das Steuergerät durchgeführt wird. In diesem Fall wird der Personenkraftwagen 14 relativ zum Primärelement 18 automatisch bewegt, wobei diese Bewegung beim Ermitteln des Erreichens der Aufladeposition durch das Steuergerät automatisch beendet wird, indem der Personenkraftwagen 14 angehalten wird. Im Rahmen dieses automatischen Parkvorgangs werden beispielsweise ein Antrieb und eine Bremse des Personenkraftwagens 14 durch das Steuergerät betätigt, so dass der Parkvorgang automatisch durchgeführt werden kann.

Darüber hinaus ist es möglich, den Fahrer alternativ oder zusätzlich kontinuierlich über die aktuelle Position des Sekundärelements 20 relativ zum Primärelement 18 und insbesondere über eine etwaige Abweichung der aktuellen Position von der Aufladeposition zu informieren, so dass er die etwaige Abweichung entsprechend verkleinern und die Aufladeposition besonders präzise anfahren kann.

Wie in Fig. 3 und 4 zu erkennen ist, sind die Sensoren 36a und 36c in Fahrzeuglängsrichtung vor dem Sekundärelement 20 angeordnet. Mit anderen Worten schließen sich die Sensoren 36a und 36c in Fahrzeuglängsrichtung nach vorne an das Sekundärelement 20 an. Die Sensoren 36b und 36d schließen sich in Fahrzeuglängsrichtung nach hinten an das Sekundärelement 20 an. Diese Anordnung hat den Vorteil, dass dadurch das Erreichen der Aufladeposition sowohl bei einer durch den Richtungspfeil 46 angedeuteten Vorwärtsfahrt als auch bei einer dazu entgegengesetzten Rückwärtsfahrt des Personenkraftwagens 14 ermittelt werden kann.

Wie anhand von Fig. 4 erkennbar ist, ist mittels der Sensoren 36a-d und mittels des Positionierungselements 40 nicht nur eine präzise Positionierung des Sekundärelements 20 relativ zum Primärelement 18 in Fahrzeuglängsrichtung, sondern auch in Fahrzeugquerrichtung möglich. Kommt es beispielsweise beim Anfahren des Primärelements 18 in Vorwärtsfahrtrichtung zu einem in Fig. 4 durch einen Richtungspfeil 48 angedeuteten Querversatz, so werden die Vertiefungen 44 und die Absätze 42 zwar mittels des Sensors 36a, jedoch aufgrund des seitlichen Versatzes (Querversatz) nicht durch den Sensor 36c erfasst. Bezogen auf die Vorwärtsfahrtrichtung des Personenkraftwagens 14 befindet sich dieser somit relativ zu dem Primärelement 18 zu weit links. In der Folge können dem Fahrer entsprechende Hinweissignale kommuniziert werden, um ihm diesen Querversatz mitzuteilen.

Im Rahmen des automatischen Parkvorgangs ist es möglich, die Position des Personenkraftwagens 14 durch das Steuergerät automatisch zu korrigieren, indem es den Personenkraftwagen 14 relativ zum Primärelement 18 weiter nach rechts bewegt. Werden mittels der Sensoren 36a und 36c die gleiche Anzahl an Absätzen 42 und Vertiefungen 44 erfasst, so kann dadurch ermittelt werden, dass kein Querversatz vorliegt.

Gemäß Fig. 4 schließen die Sensoren 36a-d in Fahrzeugquerrichtung bündig mit jeweiligen Rändern 50, 52 des Sekundärelements 20 ab. Gemäß Fig. 5 sind die Sensoren 36a-d in Fahrzeugquerrichtung im Vergleich zu Fig. 4 nach innen versetzt, so dass zwischen ihnen und den Rändern 50, 52 ein jeweiliger Abstand A vorliegt. Hierdurch ist eine Toleranz bezüglich der Positionierung des Sekundärelements 20 relativ zum Primärelement 18 in Fahrzeugquerrichtung geschaffen, da beispielsweise der Sensor 36a auch dann noch die Absätze 42 und die Vertiefungen 44 erfasst, wenn das Sekundärelement 20 das Primärelement 18 in Fahrzeugquerrichtung nach außen hin bereits ein Stück überragt und somit in Fahrzeugquerrichtung etwas versetzt zum Primärelement 18 ist. Derartige, geringe Toleranzen können jedoch hinsichtlich des Wirkungsgrads der Energieübertragung vernachlässigt werden.

Mittels der Sensoren 36a-d und des Positionierungselements 40 ist eine hochgenaue Ausrichtung des mobilen Sekundärelements 20 relativ zum stationären Primärelement 18 auf einfache Weise möglich. Eine vorgebbare bzw. vordefinierte Anzahl an Absätzen 42 und Vertiefungen 44, die gegebenenfalls standardisiert werden könnte, erlaubt eine automatische und hochpräzise Positionierung des Personenkraftwagens 14 und somit des Sekundärelements 20 sowohl in Fahrzeuglängs- als auch in Fahrzeugquerrichtung. Der Parkvorgang kann dabei mit relativ hohen Fahrzeuggeschwindigkeiten durchgeführt werden, da das Erfassen und Zählen der Absätze 42 und Vertiefungen 44 auch bei relativ hohen Geschwindigkeiten möglich ist, ohne die Positionierungsgenauigkeit zu beeinträchtigen.

Darüber hinaus ist eine automatische Durchführung des Positionierungsvorgangs durch das Steuergerät möglich, was zu einem sehr hohen Fahrtkomfort führt. Durch das geschilderte Erfassen des Abstands zwischen dem Sekundärelement 20 und dem Primärelement 18 kann in Kombination mit einem höhenverstellbaren Primärelement 18 und/oder mit einem höhenverstellbaren Sekundärelement 20 und/oder in Kombination mit einer einstellbaren Bodenfreiheit des Personenkraftwagens 14 der vertikale Abstand zwischen dem Primärelement 18 und dem Sekundärelement 20 auf einen vorgebbaren Wert eingestellt und somit hinsichtlich der Realisierung einer effizienten Energieübertragung optimiert werden.

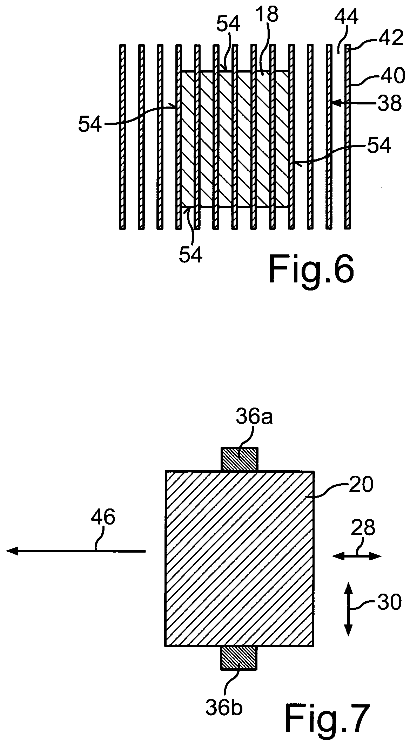

Fig. 6 und 7 veranschaulichen eine weitere Möglichkeit, das Sekundärelement 20 auf besonders einfache Weise sowie besonders präzise relativ zum Primärelement 18 zu positionieren. Das Positionierungselement 40 weist eine zumindest im Wesentlichen flächige Erstreckung auf, welche vorliegend in zwei zueinander senkrecht verlaufenden Richtungen größer ist als eine entsprechende, flächige Erstreckung des Primärelements 18. Mit anderen Worten ist das Primärelement 18 durch das Positionierungselement 40 überdeckt, wobei das Positionierungselement 40 jeweilige Ränder 54 des Primärelements 18 überragt.

Dem Sekundärelement 20 sind - wie aus Fig. 7 erkennbar ist - lediglich zwei Sensoren 36a, 36b zugeordnet, welche sich in Fahrzeugquerrichtung an das Sekundärelement 20 anschließen. Wie auch gemäß Fig. 2 - 5 zu erkennen ist, sind die Sensoren 36a und 36b bzw. 36a-d in Fahrzeughochrichtung überdeckungsfrei zu dem Sekundärelement 20 angeordnet, um die Energieübertragung vom Primärelement 18 zum Sekundärelement 20 nicht zu beeinträchtigen.

Aufgrund der entsprechenden Ausgestaltung des Positionierungselements 40 und der entsprechenden Anordnung der Sensoren 36a und 36b können die Sensoren 36a und 36b beim Überfahren des Positionierungselements 40 die Absätze 42 und die Vertiefungen 44 erfassen und entsprechend zählen. Sobald mittels der Sensoren 36a und 36b eine vorgebbare Anzahl bis zum Erreichen einer Mitte des Primärelements 18 erfasst ist, befindet sich das Sekundärelement 20 in seiner Aufladeposition. Auch die Ausrichtung des Sekundärelements 20 relativ zum Primärelement 18 in Fahrzeugquerrichtung kann auf die zuvor beschriebene Weise erfolgen.

Bei einem System, welches den Personenkraftwagen 14 mit dem Sekundärelement 20 und das Primärelement 18 umfasst, kann alternativ zu dem bisher Geschilderten vorgesehen sein, dass das Positionierungselement 40 dem Sekundärelement 20 zugeordnet und entsprechend am Personenkraftwagen 14 angeordnet ist, während die Sensoren 36a-d bzw. 36a und 36b dem Primärelement 18 zugeordnet und entsprechend auf Seiten der Fahrbahn 16 angeordnet sind. Das Erreichen der Aufladeposition und/oder die aktuelle Position des Sekundärelements 20 relativ zum Primärelement 18 kann dem Fahrer des Personenkraftwagens 14 beispielsweise über ein akustisches und/oder visuelles Signal kommuniziert werden, welches außerhalb des Personenkraftwagens 14 durch ein entsprechendes Anzeigeelement des Systems angezeigt wird. Ferner ist es möglich, dass die nun fahrbahnseitig angeordneten Sensoren 36a-d über eine entsprechende Schnittstelle mit dem Personenkraftwagen 14 gekoppelt sind, so dass das Erreichen der Aufladeposition und/oder die aktuelle Position des Sekundärelements 20 relativ zum Primärelement 18 dem Fahrer akustisch und/oder haptisch und/oder optisch im Innenraum des Personenkraftwagens 14 kommuniziert wird. Mit anderen Worten können Informationen über das Erreichen der Aufladeposition und/oder über die aktuelle Position des Sekundärelements 20 relativ zum Primärelement 18 auch innerhalb des Personenkraftwagens 14 bereitgestellt werden.

Anstelle des durch die Absätze 42 und die Vertiefungen 44 dargestellten Höhenprofils kann das Positionierungselement 40 beispielsweise auch ein entsprechendes Muster aufweisen, wobei erste der Markierungen 38 eine erste Farbe und zweite der Markierungen 38 eine von der ersten Farbe unterschiedliche, zweite Farbe aufweisen. Die erste Farbe ist beispielsweise Schwarz, während die zweite Farbe Weiß ist. Die zweiten Markierungen sind dabei jeweils zwischen zwei ersten Markierungen angeordnet. Die Sensoren 36a-d können dabei als optische Sensoren, beispielsweise Kameras, ausgebildet sein, welche die unterschiedlich farbigen Markierungen 38 optisch erfassen, zählen und auf die zuvor geschilderte Weise somit die aktuelle Position des Sekundärelements 20 relativ zum Primärelement 18 ermitteln können.

Als die Abstandssensoren können beispielsweise Ultraschallsensoren mit einem geringen Öffnungswinkel beispielsweise in einem Bereich von einschließlich 5° bis einschließlich 8° verwendet werden. Die Absätze 42 und/oder die Vertiefungen 44 weisen vorzugsweise eine Breite von ca. 2,5 cm bei einem vertikalen Abstand des Sekundärelements 20 vom Primärelement 18 von beispielsweise 15 cm auf.

## Patentansprüche

1. Verfahren zum Positionieren eines Kraftwagens (14) bezüglich eines auf Seiten einer Fahrbahn (16) des Kraftwagens (14) angeordneten Primärelements (18) einer Ladevorrichtung (10) zum berührungslosen Aufladen einer elektrischen Speichereinrichtung (12) des Kraftwagens (14), bei welchem ein mit dem Primärelement (18) korrespondierendes, am Kraftwagen (14) angeordnetes Sekundärelement (20) der Ladevorrichtung (10) relativ zu dem Primärelement (18) durch Bewegen des Kraftwagens (14) auf der Fahrbahn (16) relativ zu dieser in eine vorgebbare Aufladeposition bewegt wird, wobei ein Erreichen der Aufladeposition durch das Sekundärelement (20) mittels wenigstens eines Sensors (36a-d) und zumindest eines wenigstens zwei voneinander unterschiedliche Markierungen (38, 42, 44) aufweisenden Positionierungselements (40) ermittelt wird, indem die Markierungen (38, 42, 44) mittels des Sensors (36a-d) erfasst werden,
**dadurch gekennzeichnet, dass**
- als die Markierungen (38) Absätze (42) und quer zur Fahrtrichtung (46) verlaufende Rillen (44) verwendet werden, wobei die Absätze (42) gegenüber den Rillen (44) von der Fahrbahn (16) weg erhaben sind;
- als der Sensor (36a-d) ein Abstandssensor (36a-d) verwendet wird, wobei wenigstens ein in Fahrzeugquerrichtung von dem Abstandssensor beabstandeter, zweiter Abstandssensor (36a-d) verwendet wird;
- während einer Bewegung des Kraftwagens (14) in die Fahrtrichtung (16) über das Primärelement (18) die Absätze (42) und die Rillen (44) mittels eines der als Ultraschallsensoren ausgebildeten Abstandssensoren (36a-d) erfasst und gezählt werden, indem jeweilige, voneinander unterschiedliche Abstände des einen Abstandssensors (36a-d) von den jeweiligen Absätzen (42) und Rillen (44) erfasst werden;
- ein in Fahrzeugquerrichtung verlaufender Querversatz zwischen dem Primärelement (18) und dem Sekundärelement (20) dadurch ermittelt wird, dass die Absätze (42) und die Rillen (44) mittels des einen Abstandssensors (36a-d) erfasst werden und ein durch den anderen Abstandssensor (36a-d) bewirktes Erfassen der Absätze (42) und Rillen (44) unterbleibt; und
- das Erreichen der Aufladeposition in Abhängigkeit von der Anzahl der überfahrenen Absätze (42) und Rillen (44) und in Abhängigkeit von dem Querversatz ermittelt wird;

2. Verfahren nach Anspruch 1,
**dadurch gekennzeichnet, dass**
das Sekundärelement (20) in die Aufladeposition bewegt wird, indem der Kraftwagen (14) mittels einer Steuereinheit des Kraftwagens (14) bewegt wird, bis das Erreichen der Aufladeposition mittels des Sensors (36a-d) und des Positionierungselements (40) ermittelt wird.

## Claims

1. Method for positioning a motor vehicle (14) with respect to a primary element (18) of a charging device (10) disposed on the side of a traffic lane (16) of the motor vehicle (14) for non-contact charging of an electric storage device (12) of the motor vehicle (14) with which a secondary element (20) of the charging device (10) disposed on the motor vehicle (14) corresponding to the primary element (18) is moved relative to the primary element (18) by moving the motor vehicle (14) on the traffic lane (16) relative to this in a predetermined charging position, wherein reaching the charging position by the secondary element (20) by means of at least one sensor (36a-d) and at least one of at least two mutually different markings (38, 42, 44) having positioning element (40) is determined in that the markers (38, 42, 44) are detected by means of the sensor (36a-d), **characterised in that**
- as the markings (38) steps (42) and transversely to the direction of travel (46) extending grooves (44) are used, wherein the steps (42) are raised away relative to the grooves (44) of the traffic lane (16);
- when a distance sensor (36a-d) is used as sensor (36a-d), wherein at least one is detected by the distance sensor in the vehicle transverse direction;
- during a movement of the motor vehicle (14) in the direction of travel (16) via the primary element (18) the steps (42) and the grooves (44) are detected by means of one of the ultrasonic sensors formed as distance sensors (36a-d) and counted **in that** differently from one another the respective distances of the one distance sensor (36a-d) are detected by means of the respective steps (42) and grooves (44);
- a transverse offset extending in the vehicle transverse direction between the primary element (18) and the secondary element (20) is determined **in that** the steps (42) and the grooves (44) are detected by means of a distance sensor (36a-d) and detecting the steps (42) and grooves (44) effected by the other distance sensor (36a-d) is dispensed with; and
- reaching the charging position is determined in dependence on the number of run over steps (42) and grooves (44) and in dependence on the transverse offset;

2. Method according to claim 1, **characterised in that** the secondary element (20) is moved into the charging position by the motor vehicle (14) being moved by means of a control unit of the motor vehicle (14) until reaching the charging position by means of the sensor (36a-d) and the positioning element (40) is determined.

## Revendications

1. Procédé servant à positionner un véhicule à moteur (14) par rapport à un élément primaire (18), disposé sur des côtés d'une chaussée (16) du véhicule à moteur (14), d'un dispositif de charge (10) servant à recharger sans contact un dispositif accumulateur (12) électrique du véhicule à moteur (14), où un élément secondaire (20), correspondant à l'élément primaire (18), disposé au niveau du véhicule à moteur (14), du dispositif de charge (10) est déplacé par rapport à l'élément primaire (18) par déplacement du véhicule à moteur (14) sur la chaussée (16) par rapport à celle-ci dans une position de recharge pouvant être spécifiée, dans lequel l'atteinte de la position de recharge par l'élément secondaire (20) est déterminée au moyen d'au moins un capteur (36a-d) et d'au moins un élément de positionnement (40) présentant au moins deux marquages (38, 42, 44) différents l'un de l'autre en ce que les marquages (38, 42, 44) sont détectés au moyen du capteur (36a-d),
**caractérisé en ce que**
- des décrochements (42) et des rainures (44) s'étendant de manière transversale par rapport à la direction de déplacement (46) sont utilisés en tant que marquages (38), dans lequel les décrochements (42) sont surélevés par rapport aux rainures (44) de manière éloignée de la chaussée (16) ;
- un capteur de distance (36a-d) est utilisé en tant que capteur (36a-d), dans lequel au moins un deuxième capteur de distance (36a-d) espacé du capteur de distance dans le sens transversal de véhicule est utilisé ;
- pendant un déplacement du véhicule à moteur (14) dans la direction de déplacement (16) au-dessus de l'élément primaire (18), les décrochements (42) et les rainures (44) sont détectés et comptés au moyen d'un des capteurs de distance (36a-d) réalisés en tant que capteurs à ultrasons **en ce que** des distances différentes les unes des autres respectives du capteur de distance (36a-d) par rapport aux décrochements (42) et rainures (44) respectifs sont détectées ;
- un décalage transversal s'étendant dans le sens transversal de véhicule entre l'élément primaire (18) et l'élément secondaire (20) est déterminé **en ce que** les décrochements (42) et les rainures (44) sont détectés au moyen d'un capteur de distance (36a-d) et une détection, provoquée par l'autre capteur de distance (36a-d), des décrochements (42) et des rainures (44) n'a pas lieu ; et
- l'atteinte de la position de recharge est déterminée en fonction du nombre des décrochements (42) et rainures (44) traversés et en fonction du décalage transversal.

2. Procédé selon la revendication 1,
**caractérisé en ce que**
l'élément secondaire (20) est déplacé dans la position de recharge **en ce que** le véhicule à moteur (14) est déplacé au moyen d'une unité de commande du véhicule à moteur (14) jusqu'à ce que l'atteinte de la position de recharge soit déterminée au moyen du capteur (36a-d) et de l'élément de positionnement (40).
